# EUROPÄISCHE PATENTANMELDUNG

(11) **EP 2 495 508 A2**
(43) Veröffentlichungstag der Anmeldung: **05.09.2012**
(21) Anmeldenummer: 12001453.5
(22) Anmeldetag: 03.03.2012
(51) Int. Cl.: F24J 2/52

(54) **Halteklammer**

(30) Priorität: 04.03.2011 DE 202011003490 U
(71) Anmelder: Sodeik, Clemens, 79541 Lörrach (DE); Sodeik, Matthias, 79400 Kandern (DE)
(72) Erfinder: Sodeik, Clemens, 79541 Lörrach (DE); Sodeik, Matthias, 79400 Kandern (DE)
(74) Vertreter: Ebert, Jutta

(57) **Zusammenfassung**

Es wird eine Halteklammer vorgeschlagen, die für die Montage von Solarmodulen oder ähnlichen Komponenten an einem Trägerprofil geeignet ist. Die Halteklammer (1) besteht in ihrer einfachsten Ausführungsform aus einem Materialstreifen, der zumindest eine Basisplatte (14) aufweist, von der mindestens ein Paar Haltestützen (4) senkrecht in Bezug auf die Fläche der Basisplatte (14) in ein und derselben Richtung abragt. Der Abstand der Haltestützen (4) zueinander ist so bemessen, dass die Halteklammer (1) mit diesen Haltestützen (4) auf ein Trägerprofil (15) in Form einer beliebigen Standardschiene aufschiebbar oder aufsetzbar ist. Die Länge der Haltestützen (4) ist so bemessen, dass die Halteklammer (1) durch mindestens eine seitliche Schraubverbindung oder eine seitliche Stiftverbindung über mindestens eine der Hattestützen (4) in ihrer Stellung auf der Standardschiene als Trägerprofil (15) gesichert ist. Nach einer von mehreren Ausführungsformen kann die Basisplatte (14) vom untersten U-Schenkel (3) einer U-förmig liegenden Haltekammer (2) für ein Solarmodul gebildet sein (Fig. 4).

## Beschreibung

Die Erfindung bezieht sich auf eine Halteklammer für die Montage von Solarmodulen oder ähnlicher Komponenten an einem Trägerprofil.

Für die Montage von Solarmodulen oder ähnlicher Komponenten z.B. auf dem Dach eines Gebäudes werden auf einer (z.B. Dach-) Unterkonstruktion Trägerprofile montiert, an denen die Solarmodule oder ähnliche Komponenten mittels Halteklammern oder ähnlicher Befestigungsmittel fixiert werden.

Nach der WO 2007/143983 A2 kommt als Trägerprofil ein Vierkantprofil zur Anwendung, dessen vier Ecken abgeschrägt und mit Nuten und Hinterschneidungen versehen sind. Das Befestigungsmittel für Solarmodule besteht aus einem Spannteil mit zwei Formstücken, die mit einem Steg hakenartig in die Hinterschneidungen an den Nuten zweier benachbarter abgeschrägter Ecken des Trägerprofils eingreifen. Mit Hilfe des Spannteils kann ein Solarmodul zwischen dem Trägerprofil und den Formstücken eingeklemmt werden.

Die EP 2 090 847 A2 schlägt eine Befestigungsvorrichtung für die Befestigung von plattenförmigen Elementen (z.B. Solarmodulen) an einer Montageschiene vor, die sich aus einem ersten und einem zweiten Halteteil zusammensetzt, zwischen denen ein Zwischenraum besteht zur Aufnahme eines plattenförmigen Elements. Beide Halteteile werden von einer Befestigungsschraube durchsetzt, die ihrerseits mit Hilfe eines Verankerungsmittels in zwei sich gegenüberstehenden Nuten eines Trägerprofils verankert werden kann.

Nach der DE 102 25 863 C1 sind die Solarmodule in Rahmen gehalten, die einen L-förmigen Querschnitt aufweisen und mit ihrem einen L-Schenkel auf einem abgewinkelten Steg einer Montageschiene aufliegend fixiert sind. Am freien Ende des anderen L-Schenkels befindet sich eine Nut zur Aufnahme eines Solarmoduls. Am unteren Rand eines jeden L-förmigen Rahmens ist eine Nut mit Haltesteg vorgesehen. In diese einander gegenüberliegenden Nuten zweier benachbarter Rahmen greifen Halteschenkel einer Halteplatte ein, die mit dem abgewinkelten Steg der Montageschiene fest verbunden ist.

Die EP 1 767 719 A2 beschreibt eine Vorrichtung zur Befestigung von Solarpaneelen an einer C-förmigen Montageschiene. Sie umfasst ein Niederhalteelement für ein Solarpaneel, das mit Hilfe einer Befestigungsschraube mit einem abgewinkelten Hintergreifteil verbunden ist, wobei das Niederhalteelement und das Hintergreifteil durch eine die Befestigungsschraube umgebende Schraubenfeder auf Abstand gehalten werden. Das Hintergreifteil kann in eine Montageöffnung in dem einen Querschenkel der C-förmigen Montageschiene eingeführt werden. Das Solarpaneel wird zwischen dem Niederhalteelement und demselben Querschenkel der C-förmigen Montageschiene durch Verspannen des Niederhalteelements mit dem Hintergreifteil auf der Montageschiene fixiert.

Die Befestigungsvorrichtung für Solarpaneele an einer Montageschiene nach der EP 1 767 793 A2 besteht aus einem Niederhalteelement und einem Mutterelement, die mit einer Befestigungsschraube beabstandet miteinander verbunden sind. Das Mutterelement weist eine Nut auf, in das ein Federelement eingreift, das das Niederhalteelement und das Mutterelement auf Abstand hält. In dieselbe Nut greifen auch zwei federelastische Abschnitte ein, die sich bis über das Ende der Befestigungsschraube erstrecken und in ihren freien Endbereichen eine Einschnürung aufweisen. Diese Einschnürungen können in Eingriff gebracht werden mit den Rändern einer in einer Montageschiene vorgesehenen Montageöffnung.

Die Befestigungsvorrichtung für Solarpaneele an einer Montageschiene nach der EP 1 826 507 A2 umfasst ein Niederhalteelement und ein in eine Aufnahmenut einer Montageschiene einführbares und darin verdrehbares Hintergreifteil. Das Niederhaltelement und das Hintergreifteil sind durch eine Befestigungsschraube miteinander verbunden und werden durch eine die Befestigungsschraube umgebende Schraubenfeder auf Abstand gehalten. Ein auf der Montageschiene aufliegendes Solarpaneel wird durch Verspannen des Niederhaltelements mit dem Hintergreifteil auf der Montageschiene fixiert.

Durch die WO 2008/154980 A2 ist ein Solarmodul-Montagesystem bekannt, bei dem Montageschienen mit H-förmigem Profil zur Anwendung kommen. In das H-Profil zweier parallel verlaufender Montageschienen werden die Solarmodule eingeführt.

Die DE 101 32 557 C2 beschreibt ein Montageprofil für Solarmodule, das aus einem langgestreckten, quaderförmigen Grundkörper besteht, in dessen Innerem sich Hohlkammern über seine gesamte Länge erstrecken. An der Unterseite des Grundkörpers erstreckt sich eine untere Nut, die der Befestigung des Montageprofils an einer Unterkonstruktion dient. An der Oberseite des Grundkörpers sind beidseitig nach oben offene Dichtungsnuten vorgesehen, in denen Dichtungsstreifen angeordnet sind. Mit dem Grundkörper von oben verschraubbar ist ein Anpresselement, das zwei nach unten offene Haltenuten aufweist, die dann den Dichtungsnuten des Grundkörpers gegenüber stehen und in denen Auflagegummis befestigt werden können. Ein Solarmodul wird in den Raum zwischen einer Dichtungsnut des Grundkörpers und einer Haltenut des Anpresselements bzw. die darin angeordneten Dichtungsstreifen und Auflagegummis eingeschoben und durch Verspannen des Anpresselements mit dem Grundkörper fixiert. Das Anpresselement kann auch als Haltekreuz mit entsprechenden Aussparungen für das Solarmodul ausgebildet sein.

Es ist auch eine Modulhalteklammer bekannt, die aus einem Materialstreifen hergestellt ist, indem dieser dreifach U-förmig gebogen ist, wobei der unterste U-Schenkel zu einem Befestigungsabschnitt verlängert ist. An diesem Befestigungsabschnitt wird die Halteklammer mit Hilfe einer Hammerkopfschraube in einer nach oben offenen Nut eines Trägerprofils verankert und befestigt. Der Materialstreifen bildet dabei drei übereinander liegende, U-förmige Kammern, von denen die unterste den verlängerten Befestigungsabschnitt aufweist. Die beiden darüber liegenden, gleich tiefen, U-förmigen und in entgegengesetzter Richtung offenen Kammern dienen der Aufnahme und Halterung zweier benachbarter Solarmodule oder ähnlicher Komponenten. Ein Modul wird dabei in zwei parallel zueinander angeordnete Halteklammern in der Weise eingeschoben, dass es mit seiner einen Längsseite in der obersten U-förmigen Kammer der einen Halteklammer und mit seiner anderen Längsseite in der nächst unteren U-förmigen Kammer der anderen Halteklammer zu liegen kommt. Die unterste Kammer der Halteklammer kann dafür nicht genutzt werden, da die von oben einzusetzende Befestigungsschraube am verlängerten, untersten U-Schenkel stören würde. Die so gegenüber dem Trägerprofil etwas erhöhte Lage des Moduls zwischen zwei Halteklammern hat den Nachteil, dass sich das Modul bei Belastung, z.B. durch Schnee, verhältnismäßig stark durchbiegen und dabei beschädigt werden kann.

Bekannt ist auch ein Montagebügel, der aus einer U-förmig gebogenen Klammer besteht, deren unterer U-Schenkel verlängert und zweimal im rechten Winkel abgebogen ist. Der letzte, in derselben Richtung wie der verlängerte U-Schenkel abgebogene Abschnitt, dient als Befestigungsabschnitt, an dem der Montagebügel mit Hilfe zweier Schrauben an einem Träger befestigt wird. Somit ist dieser Montagebügel an der einmal gewählten Position festgelegt und kann in seiner Stellung oder Lage auf dem Träger nicht mehr verändert oder nachträglich justiert werden, was sich bei der Montage der Module nachteilig auswirken kann und besondere Aufmerksamkeit und Genauigkeit erfordert, da Fehler nicht oder nur umständlich und unter Inkaufnahme von Nachteilen korrigiert werden können. Die Bohrungen am Träger für die Schrauben müssen vor Ort auf der Baustelle vorgenommen werden, was Staub und Schmutz verursacht und die Montage insgesamt erschwert.

Ein weiterer Nachteil aller dieser bekannten Befestigungsvorrichtungen und Halteklammern ist, dass sie ohne Ausnahme Montageschienen oder Trägerprofile mit besonders ausgeformten, mehr oder weniger komplizierten Querschnittsprofilen mit Eingriffsnuten und dergl. benötigen, die Sonderanfertigungen mit zwangsläufig erhöhten Herstellungskosten erforderlich machen und die die Montagearbeiten verkomplizieren. Die meisten dieser Befestigungsvorrichtungen selbst bestehen aus Einzelteilen, die zunächst lose miteinander verbunden sind und bei der Montage gegeneinander verspannt werden müssen, was die Montage umständlich und zeitaufwendig macht.

Aufgabe der Erfindung ist es, eine Halteklammer für Solarmodule oder ähnliche Komponenten zu schaffen, die zusammen mit einer im Handel erhältlichen Standardschiene als Trägerprofil eingesetzt werden kann, ohne dass irgendwelche Veränderungen an der Standardschiene, wie z.B. das Einschneiden oder Vorsehen einer oder mehrerer Nuten und Hinterschneidungen, erforderlich wären. Die Halteklammer soll einfach und sicher zu montieren sein und dem Solarmodul oder einer ähnlichen Komponente sicheren Halt bieten. Schäden an einem Solarmodul oder einer ähnlichen Komponente bei der Montage oder durch äußere Belastung, z.B. durch Schnee, sollen weitgehendst vermieden werden. Während der Montagearbeiten soll die Position der Halteklammer auf dem Trägerprofil nachstellbar sein.

Erfindungsgemäß wird dies mit einer Halteklammer nach Anspruch 1 erreicht.

Die Halteklammer besteht aus einem Materialstreifen, der nach einer einfachen Ausführungsform der Erfindung zumindest eine Basisplatte aufweist, von der mindestens ein Paar Haltestützen senkrecht in Bezug auf die Fläche der Basisplatte in ein und derselben Richtung abragt, wobei der Abstand der Haltestützen zueinander so bemessen ist, dass die Halteklammer mit diesen Haltestützen vorteilhaft auf eine beliebige Standardschiene als Trägerprofil aufschiebbar oder aufsetzbar ist, und wobei die Länge der Haltestützen so bemessen ist, dass die Halteklammer durch mindestens eine seitliche Schraubverbindung oder eine Stiftverbindung über mindestens eine der Haltestützen in ihrer Stellung auf dem Trägerprofil gesichert werden kann.

Für eine solche Halteklammer sind keine Sonderanfertigungen von Trägerprofilen, keine Nachbearbeitungen an im Handel erhältlichen Schienen, etwa durch das Einschneiden einer Nut mit oder ohne Hinterschneidungen und dergleichen erforderlich, sondern es kann eine im Handel erhältliche Standardschiene unverändert als Trägerprofil eingesetzt werden. Dabei ist man in der Wahl aus unterschiedlichen Standardschienen weitgehend frei, es können Schienen mit quadratischem, rechteckigem, rundem oder ovalem Querschnittsprofil zur Anwendung kommen und der Abstand der Haltestützen entsprechend diesem Querschnittsprofil angepasst werden. Bei Schienen mit rechteckigem oder quadratischem Querschnitt ist es vorteilhaft, wenn die Ecken abgerundet sind, damit Beschädigungen am Solarmodul vermieden werden können. Vorteilhaft kann jede Halteklammer nach dem Aufsetzen auf das Trägerprofil auf diesem noch beliebig verschoben und in die für die Montage z.B. von Solarmodulen richtige Position gebracht werden, bevor sie durch Anziehen der Schraubverbindung gesichert wird. Die seitliche Befestigung der Halteklammer an den Haltestützen erlaubt eine niedrige, kompakte Bauweise, die zu günstigen Kraftflüssen und niedrigen Biegemomenten führt, was wiederum eine leichte, materialsparende und kostengünstige Bauweise erlaubt. Darüber hinaus wird eine Verschattung durch überstehende Schrauben vermieden, die die Funktion der Solarmodule beeinträchtigen kann.

Dabei kann die Länge der Haltestützen so bemessen sein, dass die Halteklammer durch eine unter dem Trägerprofil beide Haltestützen durchdringende Schraube oder einen Stift in ihrer Stellung auf dem Trägerprofil gesichert werden kann. Durch entsprechendes Anziehen der Schraube können die Haltestützen vorteilhaft mit dem Trägerprofil verspannt werden. Da sich die Haltestützen dabei leicht verformen können, ist eine einfache Sichtkontrolle des Montagezustandes möglich.

Die Länge der Haltestützen kann auch so bemessen sein, dass die Halteklammer durch eine die eine Haltestütze seitlich bis auf das Trägerprofil durchdringende Schraube, z.B. eine Madenschraube, oder einen Stift in ihrer Stellung auf dem Trägerprofil gesichert werden kann.

Es kann von Vorteil sein, wenn die Halteklammer auf dem Trägerprofil sowohl durch eine unter dem Trägerprofil durch beide Haltestützen hindurchgehende Schraube oder einen verkeilten Stift als auch durch eine nur die eine Haltestütze bis auf das Trägerprofil durchdringende (Maden-)Schraube oder einen Stift gesichert ist, so dass sowohl eine kraftschlüssige als auch eine formschlüssige Sicherung gegeben ist.

Indem die Befestigung der Halteklammer auf dem Trägerprofil nicht wie bei bekannten Halterungen von oben sondern seitlich an den Haltestützen vorgenommen wird, entfallen bei der Montage der Solarmodule störende Schraubenköpfe, man erhält eine hindernisfreie Oberfläche. Außerdem sind die Sicherungsschrauben seitlich an den Haltestützen nach der Montage der Solarmodule nicht mehr ohne weiteres zugänglich, wie bei bekannten Halteklammern, bei denen die Verschraubung von oben vorgenommen wird; damit sind die Solarmodule auch wirksam gegen zunehmend auftretenden Diebstahl gesichert. Wenn es als erforderlich erachtet wird, kann die Verschraubung noch weiter gesichert werden, indem z.B. eine Kugel in den Schraubenkopf eingeschlagen wird oder indem Schrauben mit Abreißköpfen verwendet werden.

Der Abstand der Haltestützen zueinander kann vorteilhaft so bemessen sein, dass zwischen den Haltestützen und dem Trägerprofil Reibschluss besteht.

Die Haltestützen können an der Unterseite der Basisplatte der Halteklammer angeschweißt sein. Bei einem geeigneten Fertigungsverfahren, z.B. durch Stanzen und/oder Biegen, können Halteklammer und Haltestützen auch einteilig hergestellt werden; es erübrigt sich dann der Schweißvorgang.

Nach einer Ausführungsform kann die Basisplatte der Halteklammer mit einer sie nach einer Seite verlängernden Winkelschiene verbunden sein, und mindestens ein Paar Haltestützen kann dann im Abstand zur Basisplatte von dieser Winkelschiene nach unten bzw. senkrecht in Bezug auf die Fläche der Basisplatte bzw. der Winkelschiene und von der Basisplatte weg gerichtet abragen. Mit dieser Ausführungsform lassen sich bei der Montage störende Bauteile der Unterkonstruktion umgehen, oder es können Fehler beim Zuschneiden der Standardschienen als Trägerprofile bis zu einem gewissen Grad ausgeglichen werden, indem ein Trägerprofil quasi um ein gewisses Maß verlängert werden kann.

Zu diesem Zweck können bei Bedarf auch mehrere, vorzugsweise zwei Paar Haltestützen im Abstand zur Halteklammer bzw. zu ihrer Basisplatte zueinander beabstandet von der Winkelschiene abragend angebracht sein. Dadurch wird mehr Stabilität erreicht und die Winkelschiene kann bei Bedarf entsprechend länger gewählt werden.

Nach einer anderen, bevorzugten Ausführungsform besteht die Halteklammer aus einem mindestens einmal U-förmig gebogenen Materialstreifen, so dass mindestens eine U-förmig liegende Haltekammer für ein Solarmodul oder eine ähnliche Komponente gebildet ist. In eine solche Haltekammer kann ein Gummistreifen eingelegt werden, um ein Solarmodul schonend darin lagern zu können. Vom unteren, die Basisplatte bildenden U-Schenkel der Halteklammer ragt mindesten ein Paar Haltestützen senkrecht in Bezug auf die Fläche der Basisplatte bzw. des unteren U-Schenkels der Halteklammer und von der gebildeten Haltekammer weg gerichtet ab, und der Abstand dieser Haltestützen zueinander ist so bemessen, dass die Halteklammer mit diesen Haltestützen auf ein beliebiges, handelsübliches Trägerprofil aufgeschoben oder aufgesetzt werden kann. Die Länge der Haltestützen ist so bemessen, dass die Halteklammer wiederum durch mindestens eine Schraubverbindung oder eine Stiftverbindung über mindestens eine der Haltestützen in ihrer Stellung auf dem Trägerprofil gesichert werden kann, nachdem sie in ihrer Position auf dem Trägerprofil justiert wurde.

Nach einer anderen Ausführungsform der Erfindung ist der Materialstreifen, aus dem die Halteklammer gebildet ist, zu zwei U-förmigen, in entgegengesetzter Richtung offene Haltekammern für Solarmodule oder ähnliche Komponenten geformt, und vom die Basisplatte bildenden, untersten Schenkel der Halteklammer ragt ein Paar Haltestützen senkrecht in Bezug auf die Fläche der Basisplatte bzw. des untersten U-Schenkels und von den Haltekammern weg gerichtet ab; dabei kann der Abstand zwischen den Haltestützen bevorzugt so bemessen sein, dass die Halteklammer mit diesen Haltestützen reibschlüssig auf ein Trägerprofil aufschiebbar oder aufsetzbar ist, und die Länge der Haltestützen ist auch hier so bemessen, dass die Halteklammer durch mindestens eine Schraubverbindung oder eine Stiftverbindung über mindestens eine der Haltestützen in ihrer Stellung auf dem Trägerprofil gesichert werden kann. Mit dieser Halteklammer können zwei benachbarte Solarmodule fast fugenlos und in einer Ebene liegend montiert werden. Die Module erfahren bei Belastung, z.B. durch Schnee, durch das Trägerprofil rückseitig eine gute Abstützung über ihre gesamte Fläche.

Nach einer weiteren Ausführungsform der Erfindung ist der Materialstreifen, aus dem die Halteklammer geformt ist, zweifach U-förmig gebogen, so dass zwei U-förmig übereinander liegende, in entgegengesetzter Richtung offene Haltekammern für Solarmodule oder ähnliche Komponenten gebildet sind, wobei der die Basisplatte bildende, unterste U-Schenkel der Halteklammer vorteilhaft verlängert sein kann und von ihm wiederum ein Paar Haltestützen nach unten abragt. Durch die verlängerte Basisplatte wird ein besonders stabiles und sicheres Aufsitzen der Halteklammer auf dem Trägerprofil erreicht, kippende Bewegungen werden vermieden. Wieder ist der Abstand zwischen den Haltestützen so bemessen ist, dass die Halteklammer mit diesen Haltestützen vorzugsweise reibschlüssig auf ein beliebiges Trägerprofil aufsetzbar oder aufschiebbar ist, und die Länge der Haltestützen ist so bemessen, dass die Halteklammer auf dem Trägerprofil mit Hilfe mindestens einer Schraubverbindung oder Stiftverbindung über mindestens eine der Haltestützen gesichert werden kann.

In die beiden übereinander liegenden Haltekammern können benachbarte Module oder ähnliche Komponenten eingeschoben werden. Z. B. wird ein Solarmodul mit seiner einen Längskante in die untere Haltekammer einer Halteklammer und mit ihrer anderen Längskante in die obere Haltekammer einer parallel angeordneten Halteklammer eingeschoben. Weil die Haltestützen direkt von dem untersten U-Schenkel der unteren Haltekammer abragt, ergibt sich eine vergleichsweise niedrige Bauhöhe, bzw. ein vergleichsweise geringer Abstand zwischen dem Solarmodul und dem Trägerprofil, der sich auf der Seite der unteren Haltekammer zusätzlich verringert. Bei Belastung, z.B. durch Schnee, kann das Solarmodul sich nur entsprechend begrenzt durchbiegen bevor es am Trägerprofil zur Auflage kommt und so abgestützt wird. Schäden am Solarmodul können so vermieden werden. Gleichzeitig ergibt sich eine niedrige Bauweise und eine entsprechend unauffällige Optik.

Die äußeren Ecken des untersten Schenkels der Halteklammer können vorteilhaft nach unten, von der Haltekammer weg gerichtet abgebogen sein. Damit wird vermieden, dass während der Montagearbeiten insbesondere rahmenlose Solarmodule oder ähnliche Komponenten beim Einsetzen in die Haltekammern oder auch danach bei Belastung, z.B. durch Schnee, mit den scharfen Ecken und Kanten der Halteklammer in Berührung kommen und dabei beschädigt werden könnten.

Nach einer Fortbildung auch dieser Ausführungsform der Halteklammer kann der unterste U-Schenkel der Halteklammer mit einer diesen U-Schenkel nach einer Seite verlängernden Winkelschiene verbunden sein, wobei dann im Abstand zur Halteklammer ein Paar oder auch zwei Paar Haltestützen von der Winkelschiene nach unten abragen. Damit lassen sich bei der Montage störende Bauteile der Unterkonstruktion wiederum umgehen und ausnahmsweise Fehler beim Zuschneiden der Trägerprofile ausgleichen.

Nach einer anderen Ausführungsform der erfindungsgemäßen Halteklammer ist nur eine U-förmig liegende Haltekammer gebildet und der untere U-Schenkel der Halteklammer ist verlängert und einmal nach unten und ein weiteres Mal in die den unteren U-Schenkel verlängernde Richtung rechtwinklig, ein Fußteil bildend abgebogen; dieser Fußteil ist mit einer Platte verbunden, von der ein Paar Haltestützen senkrecht in Bezug auf die Fläche des Fußteils bzw. der Platte und von der Haltekammer weg gerichtet abragt. Die Haltestützen können sich aber auch direkt am verlängerten Fußteil befinden.

Wenn sich das Paar Haltestützen unter der Haltekammer der Halteklammer befindet, ist diese Ausführungsform besonders geeignet für sogenannte Indach-Systeme. Zwischen dem unteren U-Schenkel der Halteklammer und der mit dem Fußteil verbundenen Platte wird eine weitere Kammer gebildet, in die z.B. ein an die Solarmodule anschließender Dachziegel oder ein weiteres Solarmodul eingeführt werden kann; es ergibt sich so eine gleichmäßige, geschlossene Dachfläche, die vorteilhaft für das Ableiten von Wasser und Schneemengen sein kann.

Wenn bei dieser Ausführungsform das Paar Haltestützen zur Haltekammer der Halteklammer versetzt ist, eignet sich diese Ausführungsform speziell für den Anschluss z.B. an eine Regenrinne oder einen anderen Blechanschluss an einer Dachkante.

Nach einer weiteren Ausführungsform der Erfindung können die Basisplatte und die von ihr senkrecht abragenden Haltestützen einstückig aus einem Materialstreifen geformt sein, wobei die Basisplatte und die Haltestützen einen nach drei Seiten begrenzten Raum zur Aufnahme eines Trägerprofils bilden und eine Halteklammer mit mindestens einer Haltekammer über der einen Haltestütze liegend angeordnet und befestigt ist. Diese Ausführungsaform der Halteklammer eignet sich dazu, seitlich auf eine Trägerprofil aufgeschoben zu werden, wenn Umstände es vorteilhaft erscheinen lassen.

Bei der letztgenannten Ausführungsform kann mindestens eine Haltestütze an ihrem freien Ende zweimal rechtwinklig abgewinkelt sein, so dass eine teilweise, streifenförmige Begrenzung auch nach der vierten Seite des das Trägerprofil aufnehmenden Raums gegeben ist und ein parallel zu den Haltestützen verlaufender, nach innen versetzter Fortsatz besteht; in diesem Fortsatz und gegenüberliegend in der anderen Haltestütze können dann Löcher zur Aufnahme einer Sicherungsschraube vorgesehen sein. Infolge der teilweisen, streifenförmigen Begrenzung des das Trägerprofil aufnehmenden Raums auch nach seiner vierten Seite, wird der Sitz der Halteklammer auf dem Trägerprofil noch sicherer.

Bevorzugtes Material für die erfindungsgemäße Halteklammer ist rostfreier Stahl. Die neue Halteklammer erlaubt auch die Verwendung von Edelstahl für das Trägerprofil statt des bisher üblichen Aluminiums. Dies hat wegen des höheren Schmelzpunktes von Edelstahl unter anderem Vorteile im Falle eines Brandes.

Die Erfindung wird im Folgenden anhand der anhängenden Zeichnung näher beschrieben; es zeigen
- Fig. 1: eine erste Ausführungsform der erfindungsgemäßen Halteklammer in Seitenansicht,
- Fig. 2: die Ansicht der Halteklammer gemäß Fig. 1 in Richtung des Pfeiles A in Fig. 1,
- Fig. 3: eine Draufsicht auf die Halteklammer gemäß Fig. 1,
- Fig. 4: eine perspektivische Ansicht der Halteklammer nach den Fig. 1 bis 3,
- Fig. 5: eine zweite Ausführungsform der erfindungsgemäßen Halteklammer in Seitenansicht,
- Fig. 6: die Fig. Ansicht der Halteklammer gemäß Fig. 5 in Richtung des Pfeiles B in 5,
- Fig. 7: eine Draufsicht auf die Halteklammer gemäß Fig. 5,
- Fig. 8: eine perspektivische Ansicht der Halteklammer gemäß Fig. 5,
- Fig. 9: eine dritte Ausführungsform der erfindungsgemäßen Halteklammer in Seitenansicht,
- Fig. 10: die Ansicht der Halteklammer gemäß Fig. 9 in Richtung des Pfeiles C in Fig. 9,
- Fig. 11: eine Draufsicht auf die Halteklammer gemäß Fig. 9,
- Fig. 12: eine perspektivische Ansicht der Halteklammer gemäß Fig. 9,
- Fig. 13: eine vierte Ausführungsform der erfindungsgemäßen Halteklammer in Seitenansicht,
- Fig. 14: die Ansicht der Halteklammer gemäß Fig. 13 in Richtung des Pfeiles D in Fig. 13 und
- Fig. 15: eine Draufsicht auf die Halteklammer gemäß Fig. 13,
- Fig. 16: eine perspektivische Ansicht der Halteklammer nach Fig. 13,
- Fig. 17: eine perspektivische Ansicht einer anderen Ausführungsform der erfindungsgemäßen Halteklammer,
- Fig. 18: eine weitere Ausführungsform der erfindungsgemäßen Halteklammer in Seitenansicht,
- Fig. 19: Abschnitte zweier gerahmter Solarmodule mit den sich nach der Montage gegenüberstehenden Seitenkanten,
- Fig. 20: die Seitenansicht der Halteklammer gemäß Fig. 18 mit den an ihr montierten Solarmodulen nach Fig. 19,
- Fig. 21: die Seitenansicht einer Weiterbildung der Ausführungsform der Halteklammer nach Fig. 18,
- Fig. 22: die perspektivische Ansicht der Halteklammern nach Fig. 21,
- Fig. 23: die Unterseite einer Ausführungsform eines Solarmoduls als Abschnitt,
- Fig. 24: die Seitenansichten zweier sich mit ihren Seitenkanten gegenüberstehenden Solarmodule nach Fig. 23,
- Fig. 25: die Halteklammer gemäß Fig. 18,
- Fig. 26: die Seitenansicht einer Halteklammer gemäß Fig. 18 oder Fig. 25 mit montierten Solarmodulen gemäß Fig. 23 und 24,
- Fig. 27: die Unterseite einer anderen Ausführungsform eines Solarmoduls als Abschnitt,
- Fig. 28: zwei sich mit ihren Seitenkanten gegenüberstehende Solarmodule gemäß Fig. 27 in Seitenansicht,
- Fig. 29: in Seitenansicht eine Halteklammer gemäß Fig. 21 mit montierten Solarmodulen nach Fig. 27 und 28,
- Fig. 30 und Fig. 31: jeweils eine perspektivische Ansicht weiterer Ausführungsformen der erfindungsgemäßen Halteklammer.

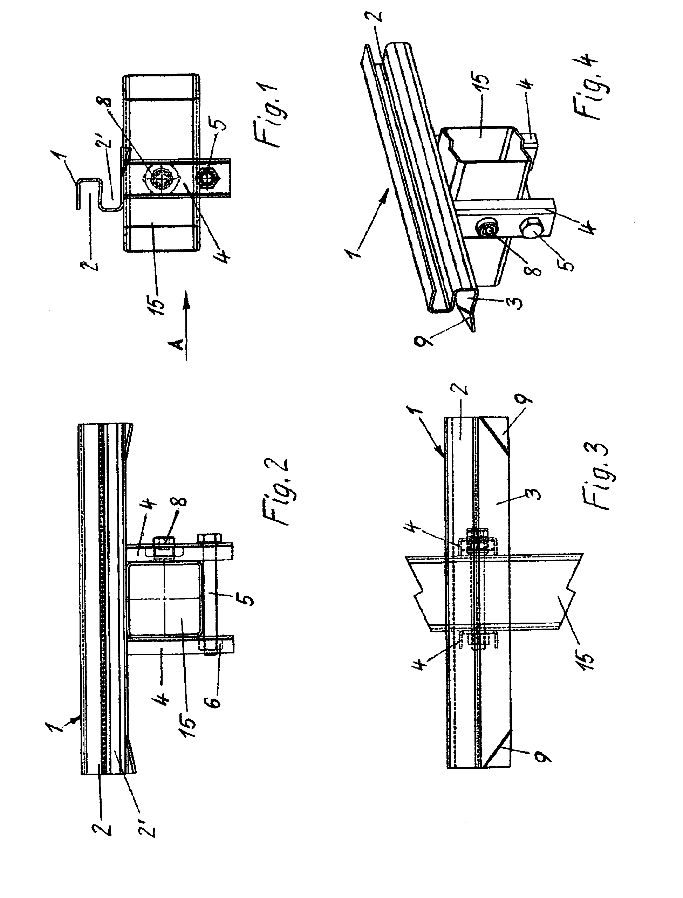

Die Halteklammer 1 gemäß Fig. 1 bis Fig. 4 besteht aus einem Materialstreifen 1, der doppelt U-förmig gebogen ist. Es werden dabei zwei übereinander liegende, in entgegengesetzter Richtung offene, U-förmige Haltekammern 2, 2' gebildet, in denen jeweils ein Solarmodul oder eine ähnliche Komponente mit ihrer einen Längskante eingeschoben und gehalten werden kann. In eine solche Haltekammer 2, 2' kann ein Gummistreifen eingelegt werden, um ein Solarmodul schonend darin lagern zu können. Der unterste U-Schenkel 3 ist um eine geringes Maß verlängert, und an ihm sind zwei nach unten weisende Haltestützen 4 in der Weise, z.B. durch Verschweißen, angebracht, dass zwischen ihnen ein Abstand besteht, der dem Maß einer handelsüblichen Standardschiene, z.B. eines Standard-Vierkantrohres 15, entspricht, welches als Trägerprofil 15 für die Module zur Anwendung kommen soll. Die Haltestützen 4 können gemäß Fig. 3 und 4 jeweils aus einem U-förmig gebogenen Winkelblech bestehen; sie sind vorzugsweise so am unteren U-Schenkel 3 der Halteklammer 1 befestigt, dass sie mit ihrer offenen Seite in dieselbe Richtung weisen. Die Länge der Haltestützen 4 ist so bemessen, dass sie, wenn die Halteklammer 1 mit ihren Haltestützen 4 auf eine Standardschiene, z.B. ein Standard-Vierkantrohr, als Trägerprofil 15 aufgesteckt wird, nach unten bzw. seitlich entlang dem Trägerprofil 15 mindestens soweit über diese Standardschiene ragen, dass die Halteklammer 1 an mindestens einer der Haltestützen 4 mit Hilfe einer durch diese Haltestütze 4 bis auf das Trägerprofil 15 durchgehende Schraube 8, z.B. eine Madenschraube 8, in ihrer Position auf dem Trägerprofil 15 gesichert werden kann. Dies kann für eine sichere Positionierung der Halteklammer 1 auf dem Trägerprofil 15 bereits ausreichen.

Gemäß Fig. 1 bis Fig. 4 ist die Länge der Haltestützen 4 vorteilhaft so bemessen, dass die Haltestützen 4 seitlich entlang dem Trägerprofil 15 bis über das Trägerprofil 15 nach unten hinausragen. Mit einer Schraube 5, die in geringem Abstand zur Standardschiene bzw. dem Trägerprofil 15 durch die beiden Haltestützen 4 hindurchgeht und vorzugsweise mit einer Mutter 6 gesichert ist, kann die Halteklammer 1 dann auf dem Trägerprofil 15 gesichert werden. Der Abstand der Schraube 5 zum untersten U-Schenkel 3 der Halteklammer 1 ist dabei vorteilhaft so bemessen, dass der von dem U-Schenkel 3, den beiden Haltestützen 4 und der Schraube 5 eingeschlossene Raum 7 dem Querschnittsprofil der Standardschiene bzw. des Trägerprofils 15 entspricht, so dass die Halteklammer 1 sicher auf dem Trägerprofil 15 aufsitzt. Durch entsprechendes Anziehen der Schraube 5 können die Haltestützen 4 an ihren freien Enden etwas zusammengezogen werden, so dass ein sicherer Reibschluss zwischen dem Trägerprofil 15 und den Haltestützen 4 entsteht, der für einen sicheren Sitz der Halteklammer 1 bereits ausreichend sein kann. Mit einer durch die eine Haltestütze 4 bis auf das Trägerprofil hindurchgehenden Madenschraube 8 kann die Halteklammer 1 zusätzlich formschlüssig gegen Verschieben auf der Standardschiene bzw. dem Trägerprofil 15 gesichert werden. Die Haltestützen 4 können dabei leicht verformt werden, so dass eine optische Kontrolle des Montagezustandes möglich ist.

Bei der Wahl der Standardschiene als Trägerprofil 15 ist man weitgehend frei. Vorzugsweise wird eine Standardschiene in Form eines Standard-Vierkantrohres verwendet werden, dessen Querschnittsprofil kann quadratisch oder in beliebiger Weise rechteckig sein. Es kann aber auch eine Standardschiene mit rundem oder ovalem Querschnittsprofil zur Anwendung kommen; die Abstände zwischen den Haltestützen 4 und gegebenenfalls zwischen dem unteren U-Schenkel 3 der Halteklammer 1 und der Schraube 5 müssen dann dem Durchmesser dieser Standardschiene angepasst werden. Anzustreben ist jedenfalls ein Reibschluss zwischen dem Trägerprofil 15 und den anliegenden Teilen der Halteklammer 1.

Die erfindungsgemäße Halteklammer 1 eignet sich für die Montage sowohl von Solarmodulen mit Rahmen als auch besonders von rahmenlosen Solarmodulen, die ihre Vorteile haben, aber auch einer schonenden Behandlung gerade bei der Montage bedürfen. Um Schäden beim Einsetzen eines Moduls in die untere Haltekammer 2', beispielsweise durch Verkratzen, oder später bei Belastung, z.B. durch Schnee, zu vermeiden, können die beiden äußeren Ecken 9 des untersten U-Schenkels 3 der Halteklammer 1 nach unten abgebogen sein, so dass ein Modul nicht mit diesen Ecken 9 und deren scharfen Kanten in Berührung kommen kann. Für eine besonders schonende Lagerung der Module können zusätzlich in die Haltekammern 2, 2' Gummistreifen eingelegt werden.

Ein Vorteil der neuen Halteklammer 1 ist auch, dass an ihr zwei übereinander liegende Haltekammern 2, 2' gebildet werden können, von denen sich die untere unmittelbar über dem Trägerprofil 15, d.h. der Standardschiene, befindet. Wenn ein Modul mit seiner einen Längsseite in die obere Haltekammer 2 einer ersten Halteklammer 1 und mit seiner anderen Längsseite in die untere Haltekammer 2' einer parallel angeordneten, zweiten Halteklammer 1 eingeschoben wird, ergibt sich ein nur geringer Abstand zwischen dem Modul und dem Trägerprofil 15, der sich vor allem zur unteren Haltekammer 2' der zweiten Halteklammer 1 hin noch weiter verringert. Das Modul kann sich so auch bei starker äußerer Belastung, z.B. durch Schnee, nur wenig durchbiegen, bevor es zumindest teilweise auf dem Trägerprofil 15 zur Auflage kommt und somit rückseitig abgestützt wird.

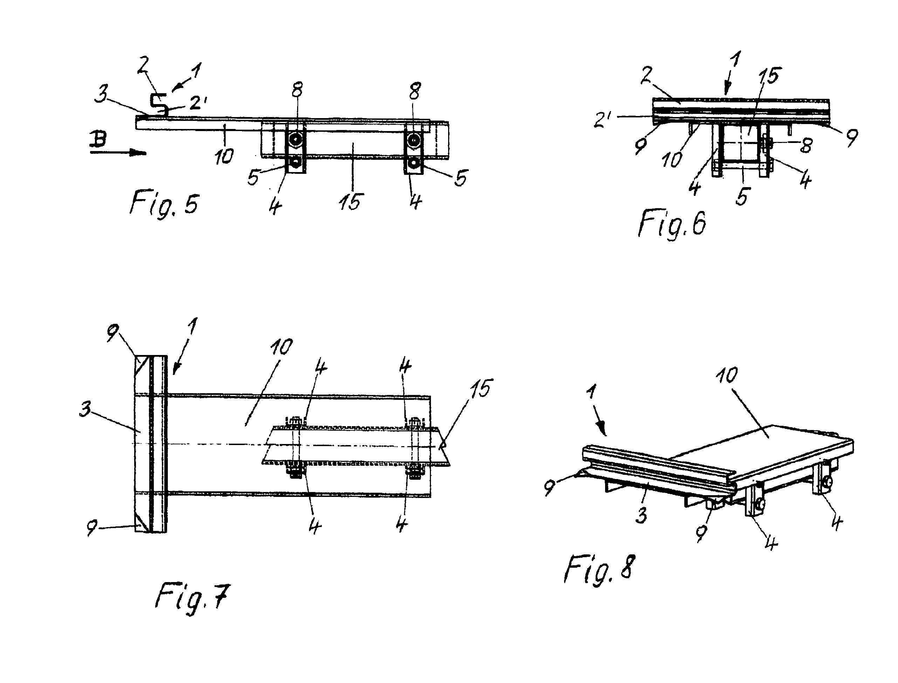

Fig. 5 bis Fig. 8 zeigen eine Variante der Halteklammer nach Fig.1 bis Fig. 4, die besonders geeignet ist für Anwendungsfälle, bei denen z.B. aus bautechnischen Gründen die Halteklammer 1 selbst gegenüber ihrer Halterung an einer Standardschiene als Trägerprofil 15 um ein bestimmtes Maß versetzt sein soll oder muss. Die eigentliche Halteklammer 1 ist ebenso ausgebildet, wie oben anhand von Fig. 1 bis Fig. 4 bereits beschrieben, indem sie zweimal U-förmig gebogen ist und so zwei U-förmige, übereinander liegende, in entgegengesetzter Richtung offene Haltekammern 2 und 2' gebildet sind. Mit ihrem geringfügig verlängerten, untersten U-Schenkel 3 aber ist sie zunächst mit dem einen Ende einer langgestreckten, U-förmig gebogenen Winkelschiene 10, und zwar an dessen äußerer Bodenfläche, verbunden. In einem Abstand zur Halteklammer 1, der z.B. nach bautechnischen Gegebenheiten zu bestimmen ist, sind an der inneren Bodenfläche der Winkelschiene 10 Haltestützen 4 befestigt, mit denen die Halteklammer 1, wie oben beschrieben, auf eine Standardschiene als Trägerprofil 15 aufgesetzt und verschoben und ebenfalls, wie oben beschrieben, mit einer Schraube 5 und/oder einer Madenschraube 8 gesichert werden kann. Je nachdem wie groß der Abstand zwischen der eigentlichen Halteklammer 1 und ihrer Halterung am Trägerprofil 15 sein soll, wie lang demzufolge die Winkelschiene 10 sein muss, wird empfohlen, aus Stabilitätsgründen nicht nur ein Paar Haltestützen 4, sondern zueinander beabstandet mindestens zwei Paar Haltestützen 4 an der Winkelschiene 10 anzubringen. Es versteht sich von selbst, dass die Winkelschiene 10 unter der eigentlichen Halteklammer 1 mindestens so breit sein muss, dass sie die Haltestützen 4 eines jeden Paares, die dem Querschnittsprofil der Standardschiene bzw. des Trägerprofils 15 entsprechend beabstandet sein müssen, aufnehmen kann. Mit dieser Variante der Halteklammer lassen sich z.B. bei der Montage störende Bauteile der Unterkonstruktion umgehen, oder es können ausnahmsweise Fehler beim Zuschneiden der Standardschienen als Trägerprofile 15 durch Verlängerung bis zu einem gewissen Grad ausgeglichen werden.

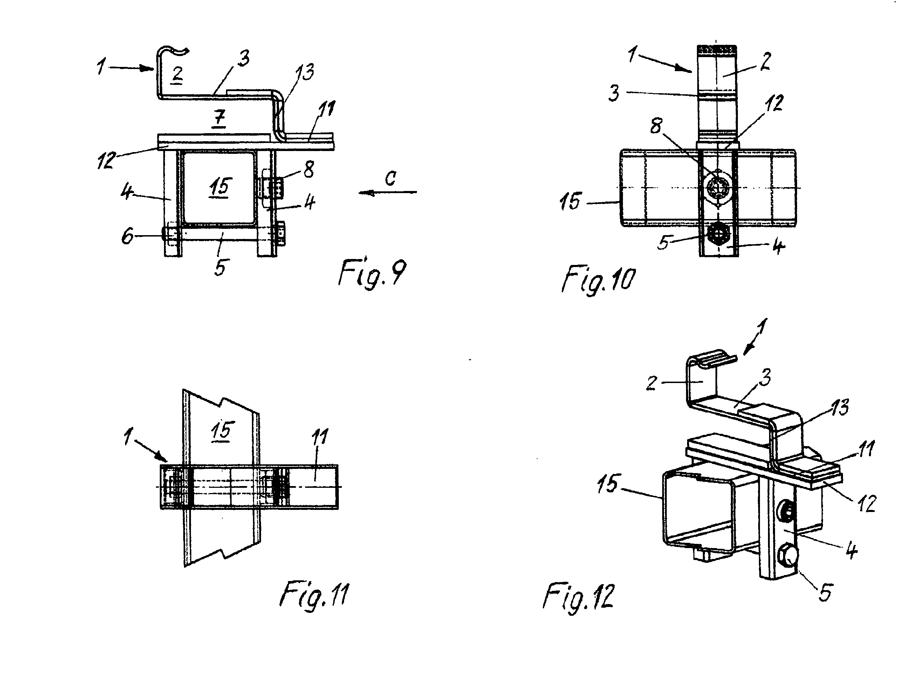

Die Fig. 9 bis Fig. 12 zeigen eine Halteklammer 1, die besonders geeignet ist, für ein sogenanntes Indach-System, nach dem Solarmodule und auch benachbarte Dachziegel schindelartig überlappend angeordnet werden können; es lässt sich mit dieser Ausführungsform der Halteklammer eine regelmäßige Struktur der gesamten Oberfläche erhalten, und diese ist gut geeignet, um Wasser und Schneemengen abzuleiten. Die eigentliche Halteklammer 1 ist so gebogen, dass eine U-förmig liegende Haltekammer 2 für ein Solarmodul oder eine ähnliche Komponente entsteht, deren unterer U-Schenkel 3 verlängert und danach rechtwinklig nach unten und nochmals rechtwinklig in Verlängerung des U-Schenkels 3 abgebogen ist. Damit entsteht ein Fußteil 11, mit dem die Halteklammer 1 fest mit einer Platte 12 verbunden, vorzugsweise verschweißt, ist. Sowohl das Fußteil 11 als auch die Platte 12 können durch eine fest mit ihnen verbundene Auflage verstärkt sein. Die Verbindung zwischen dem Fußteil 11 der Halteklammer 1 und der Platte 12 ist so hergestellt, dass sich ein Bereich der Platte 12 unterhalb des U-Schenkels 3 bzw. der Haltekammer 2 erstreckt. Der Fußteil 11 der Halteklammer 1 und die Platte 12 können auch einstückig, ineinander übergehend hergestellt sein. An der Unterseite, d.h. an der von der Haltekammer 2 abgewandten Seite der Platte 12 ist ein Paar Haltestützen 4 in der Weise, vorzugsweise durch Verschweißen, angebracht, wie es oben bereits mit Bezug auf Fig. 2 beschrieben wurde. Ebenso kann die Halteklammer 1 mit ihren Haltestützen 4 auf ein Trägerprofil 15 aufgesetzt werden und durch eine die beiden Haltestützen 4 durchsetzende Schraube 5 und/oder eine Madenschraube 8 an der einen Haltestütze 4 gesichert werden. Das Trägerprofil 15 erstreckt sich in dem durch die Platte 12 die beiden Haltestützen 4 und die Schraube 5 umschlossenen Raum. Zwischen der Platte 12 und dem unteren U-Schenkel 3 entsteht dabei eine weitere Kammer 7, in die wiederum ein benachbartes Solarmodul oder ein angrenzender Dachziegel eingeschoben werden kann, wodurch eine gleichmäßige Struktur der Dachoberfläche erreicht werden kann.

Eine Verschraubung des Fußteils 11 mit der Platte 12 ist ebenfalls möglich und in diesem Fall nicht störend beim Einsetzen eines Moduls in die Haltekammer 2, da es durch den senkrecht nach unten abgebogenen Abschnitt 13 des U-Schenkels 3 der Halteklammer 1 auf Abstand zum Fußteil 11 gehalten wird.

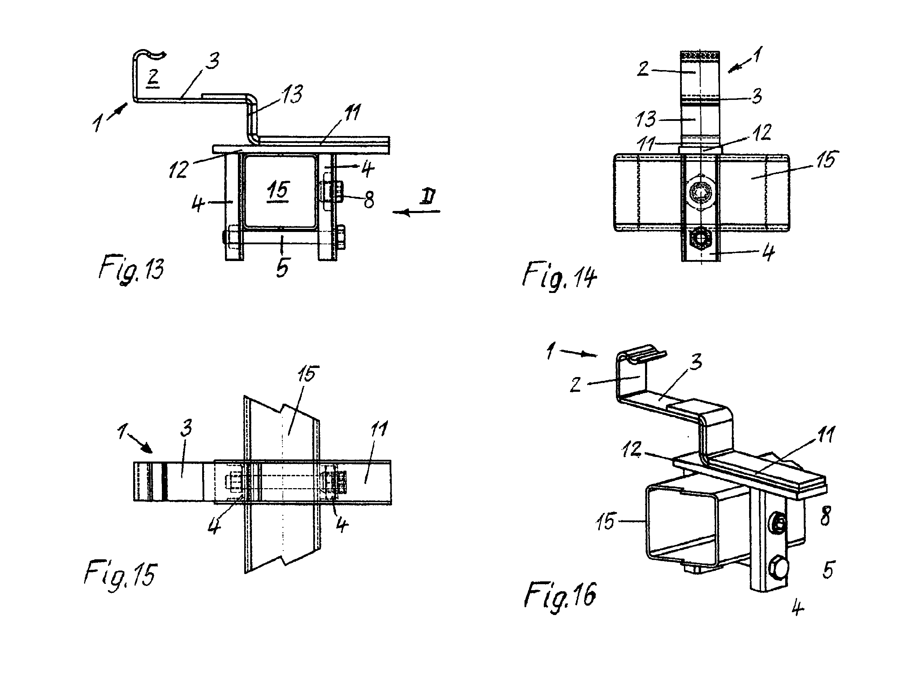

Die Fig. 13 bis Fig. 16 zeigen eine Ausführungsform der erfindungsgemäßen Halteklammer, die speziell geeignet ist zur Halterung von Solarmodulen oder ähnlicher Komponenten, die nach einer Seite den Abschluss einer aus mehreren Modulen oder Komponenten bestehenden Anlage bilden, die also an zumindest einer ihrer Kanten kein benachbartes Modul, keine benachbarte Komponente haben, an dieser Kante aber ebenfalls eine Halterung brauchen. Diese Halteklammer 1 kann vorteilhaft an einem Blechabschluss, z.B. einer Regenrinne, enden. Auch lassen sich, wie oben bereits im Zusammenhang mit der Variante gemäß Fig. 5 bis Fig. 8 beschrieben, bei der Montage störende Bauteile der Unterkonstruktion umgehen.

Im Vergleich zur Ausführungsform gemäß Fig. 9 ist gemäß Fig. 13 das Fußteil 11 der Halteklammer 1 deutlich verlängert und in der Weise mit der Platte 12 verbunden, dass die Halteklammer 1 mit ihrer Haltekammer 2 seitlich über die Platte 12 hinausragt. Von der Platte 12 ragt ein Paar Haltestützen 4 in der beschriebenen Weise nach unten bzw. von der Haltekammer 2 weg gerichtet ab. Auch in diesem Fall können Fußteil 11 der Halteklammer 1 und die Platte 12 einteilig, ineinander übergehend ausgebildet sein.

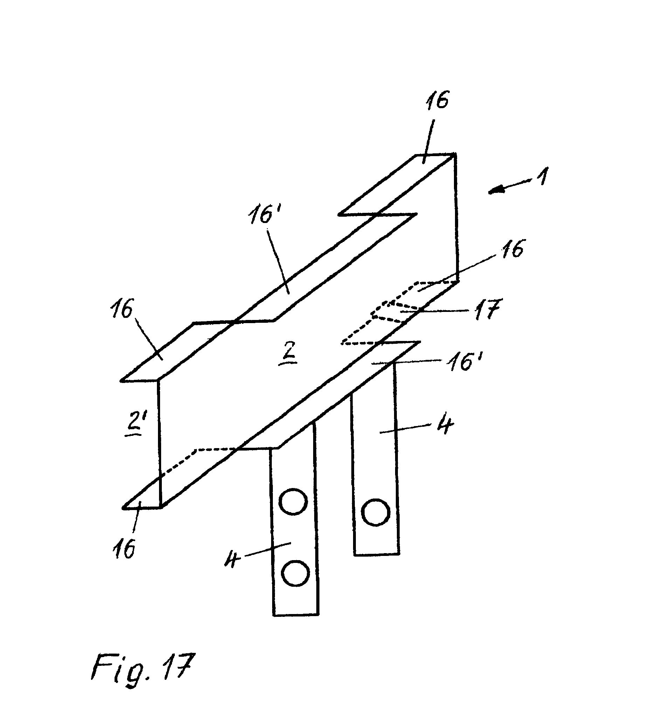

Fig. 17 zeigt eine Ausführungsform der Erfindung, bei der ein Materialstreifen 1, aus dem die Halteklammer 1 geformt ist, entlang seiner Ober- und Unterkante zunächst rechtwinklig abgebogen ist. Dabei sind die beiden abgebogenen Streifen in Abschnitte 16, 16' unterteilt, die abwechselnd in entgegengesetzter Richtung rechtwinklig vom Materialstreifen 1 abgebogen sind; im dargestellten Beispiel sind dies jeweils drei Abschnitte 16 und 16' am unteren und oberen Streifen der Halteklammer 1. Vom mittleren Abschnitt 16' des unteren Streifens, der vorteilhaft länger ausgebildet sein kann als die beiden äußeren Abschnitte 16, ragen nach unten in der oben beschriebenen Weise die Haltestützen 4 ab, mit denen sich die Halteklammer 1 auf einem Trägerprofil (hier nicht dargestellt) aufsetzen und in ihrer Position sichern lässt. Zwischen den Abschnitten 16, 16' sind so zwei auf gleicher Höhe liegende, in entgegengesetzter Richtung offene Haltekammern 2, 2' entstanden, in die Solarmodule eingeschoben werden können. An einem oder auch mehreren der Abschnitte 16, 16' können Zungen 17 hochgebogen sein, die zu einer sicheren Halterung der Solarmodule beitragen. Diese Ausführungsform der Halteklammer lässt sich besonders kostengünstig und materialsparend durch Stanzen und Biegen herstellen.

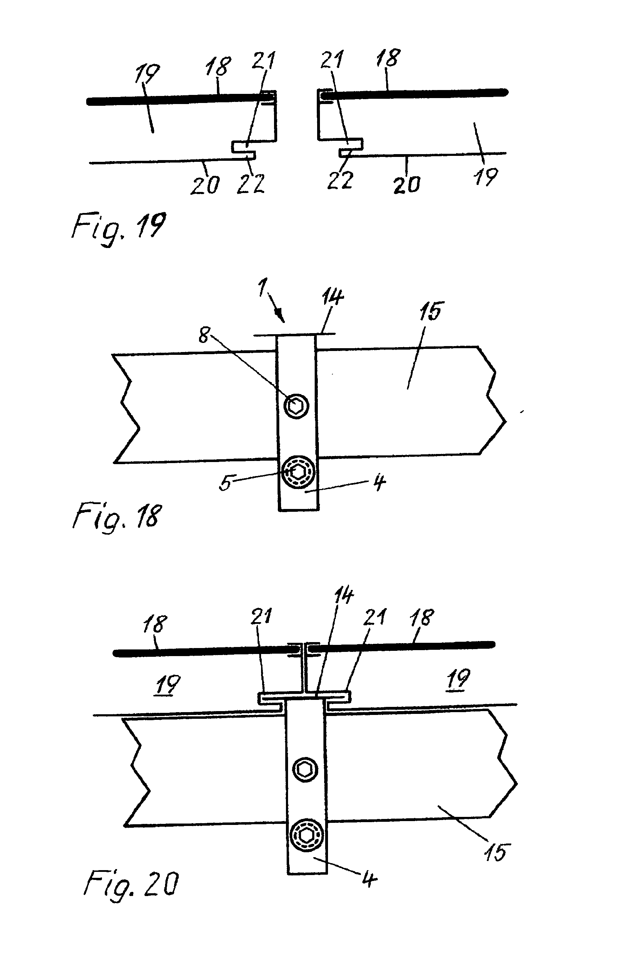

Die Fig. 18 zeigt eine weitere Ausführungsform der erfindungsgemäßen Halteklammer 1. Sie besteht in diesem Fall lediglich aus einer Basisplatte 14, von der mittig nach unten wiederum zwei Haltestützen 4 abragen, mit denen sie, wie beschrieben, auf ein Trägerprofil 15 aufgesetzt werden und seitlich an den Haltestützen 4 mittels einer (Maden-)Schraube 8 und/oder einer unter dem Trägerprofil 15 hindurchgehenden Schraube 5 in ihrer Position gesichert werden kann. Diese Ausführungsform eignet sich besonders für die Montage von gerahmten Solarmodulen, wie sie schematisch und als Abschnitte in Fig. 19 wiedergegeben sind. Dargestellt sind in Seitenansicht die einander gegenüber stehenden Kanten zweier benachbart zu montierender Solarmodule 18 mit Rahmen 19. Die Solarmodule 18 liegen in einer U-förmigen Ausnehmung am freien Rand der Rahmens 19, und jeder Rahmen 19 ist nahe seiner Grundfläche 20 mit einer U-förmigen Hinterschneidung 21 versehen, deren unterer, in die Grundfläche 20 übergehender Schenkel 22 um ein Maß zurückgesetzt ist, das in etwa der halben Breite der Haltestützen 4 entspricht. Gerahmte Solarmodule 18 lassen sich mit dieser Halteklammer nahezu fugenlos anordnen, indem gemäß Fig. 20 zwei benachbarte Solarmodule 18 mit ihren Rahmen 19 so beidseitig auf die Halteklammer bzw. deren Basisplatte 14 aufgeschoben werden, dass die Basisplatte 14 in die Hinterschneidungen 21 der Rahmen 19 eingreifen und die Rahmen 19 der Solarmodule 18 sich in der Mitte der Halteklammer 1 nur mit äußerst geringem Abstand gegenüberstehen oder sogar aneinander anliegen können.

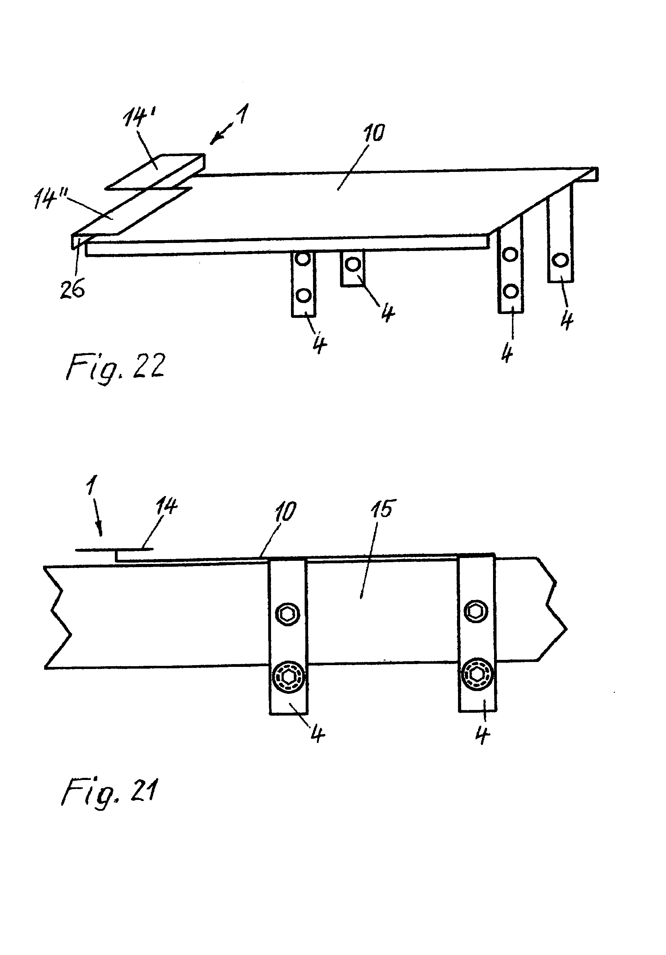

Die Fig. 21 und 22 zeigen eine Weiterbildung der Halteklammer nach Fig. 18, die in ihrem Verwendungszweck der oben anhand der Fig. 5 bis 8 beschriebenen Ausführungsform entspricht. Die Basisplatte 14 ist an ihrer Unterseite rechtwinklig beabstandet mit einer lang gestreckten Winkelschiene 10 verbunden, von der nach unten bzw. von der Basisplatte 14 weg gerichtet mindestens ein Paar Haltestützen 4, im dargestellten Beispiel zwei Paar Haltestützen 4, abragen, mit denen die Halteklammer 1 auf ein Trägerprofil 15 aufgesetzt und durch seitliche Verschraubung gesichert werden kann. In Fig. 22 ist dargestellt, wie sich diese Halteklammer 1 einfach, preisgünstig und materialsparend herstellen lässt. Die Basisplatte 14 besteht aus einem Winkelblech 26 von dem zwei Abschnitte 14', 14" in entgegengesetzter Richtung rechtwinklig abgebogen sind. Wie oben anhand von Fig. 5 bis Fig. 8 beschrieben, kann diese Ausführungsform vorteilhaft dann zur Anwendung kommen, wenn z.B. aus bautechnischen Gründen die Halteklammer 1 selbst gegenüber ihrer Halterung an einem Trägerprofil 15 um ein bestimmtes Maß versetzt sein soll oder muss. Es lassen sich z.B. bei der Montage störende Bauteile der Unterkonstruktion umgehen, oder es können ausnahmsweise Fehler beim Zuschneiden der Standardschienen als Trägerprofile 15 durch Verlängerung ausgeglichen werden.

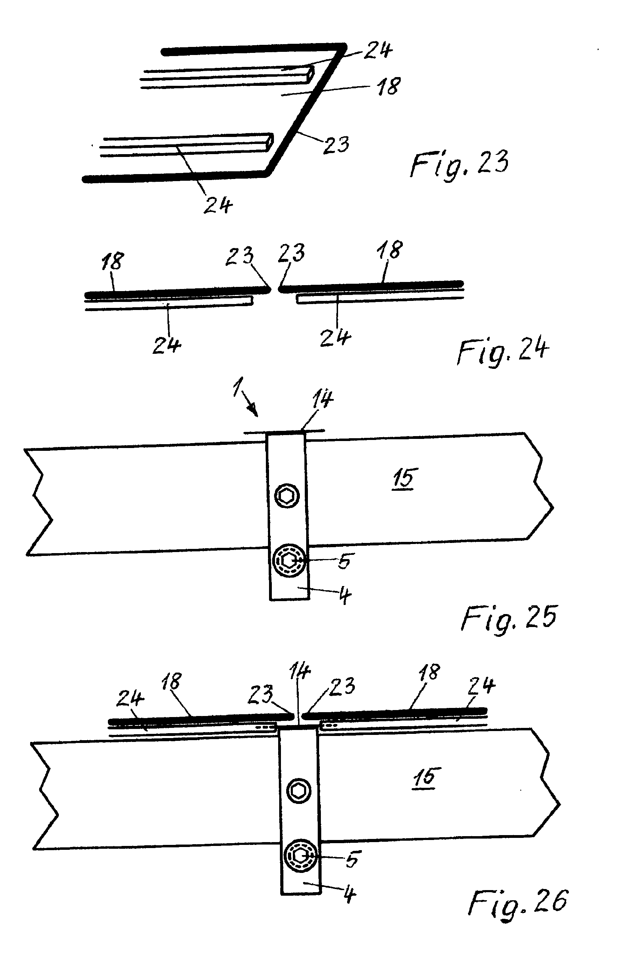

In Fig. 23 bis Fig. 26 ist dargestellt, wie eine Halteklammer 1 gemäß Fig. 18 bei der Montage von rahmenlosen Solarmodulen 18 zur Anwendung kommen kann. Zur besseren Veranschaulichung ist die Halteklammer in ihrer Ausführungsform gemäß Fig. 18 nochmals als Fig. 25 wiedergegeben. Fig. 23 zeigt die Unterseite eines Solarmoduls 18, an der in Längsrichtung, d.h. rechtwinklig zur Montagekante 23, aber von der Montagekante 23 zurückgesetzt, mindestens zwei Montageleisten 24 beabstandet befestigt sind. Fig. 24 zeigt die Seitenansicht zweier solcher Solarmodule 18 mit Montageleisten 24, die sich mit ihren Montagekanten 23 gegenüberstehen. Indem die Montageleisten 24 von der Montagekante 23 zurückgesetzt sind, können die rahmenlosen Solarmodule 18 auf die Halteklammer bzw. deren Basisplatte 14 soweit aufgeschoben werden, bis die Montageleisten 24 an den Haltestützen 4 der Halteklammer 1 zur Anlage kommen. Wenn der Abstand der Montageleiste 24 zur Montagekante 23 jedes Solarmoduls 18 etwa der halben Breite der Haltestützen 4 entspricht, kann eine nahezu fugenlose Anordnung auch der rahmenlosen Solarmodule 18 erreicht werden (Fig. 26).

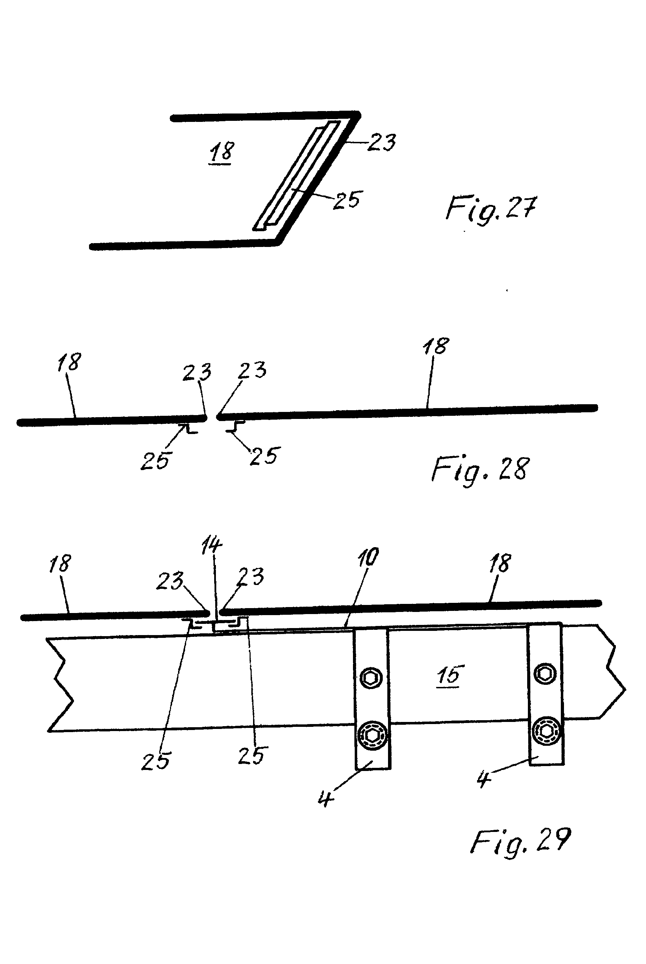

Fig. 27 zeigt ein rahmenloses Solarmodul 18, an dessen Unterseite entlang seiner Montagekante 23, aber von ihr etwas zurückgesetzt, ein Montagewinkel 25 befestigt ist. Fig. 28 zeigt zwei Solarmodule gemäß Fig. 27, die sich mit ihren Montagekanten 23 gegenüberstehen, und Fig. 29 zeigt, wie zwei rahmenlose Solarmodule gemäß Fig. 27 an einer Halteklammer gemäß Fig. 21 nahezu fugenlos montiert werden können. Eine Halteklammer gemäß Fig. 25 könnte hier ebenfalls zur Anwendung kommen.

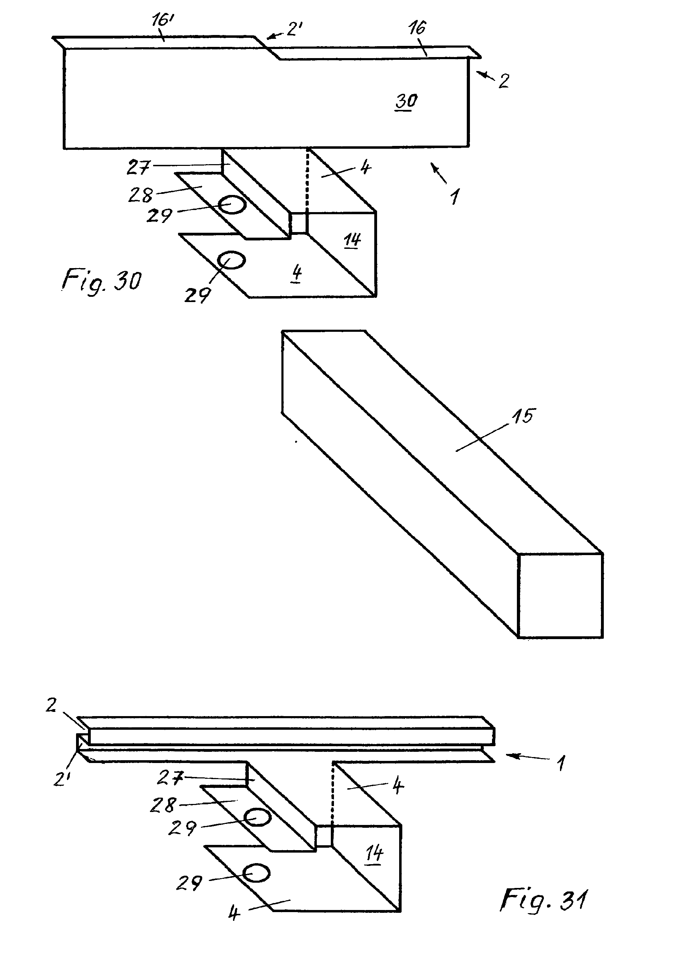

Es versteht sich von selbst, dass eine erfindungsgemäße Halteklammer nicht nur von oben auf ein Trägerprofil aufgesetzt oder aufgeschoben werden kann. Sie kann bei Bedarf auch von einer Seite oder auch von unten auf ein Trägerprofil aufgeschoben und in der beschriebenen Weise gesichert werden. Die Fig. 30 und 31 zeigen Ausführungsformen der Halteklammer, die sich speziell für die Montage von einer Seite auf einem Trägeprofil 15 eignen. Die Basisplatte 14 mit den senkrecht von ihr abragenden Haltestützen 4 sind hier in beiden Fällen einstückig aus einem Materialsteifen geformt. In dem von der Basisplatte 14 und den Haltestützen 4 nach drei Seiten begrenzten Raum kann ein Trägerprofil 15 aufgenommen werden. Vorzugsweise kann zumindest eine der Haltestützen 4 an ihrem freien Ende so zweimal rechtwinklig abgewinkelt sein, dass zum einen eine teilweise, streifenförmige Begrenzung 27 auch zur vierten Seite des das Trägerprofil 15 aufnehmenden Raums entsteht und außerdem ein .parallel zu den Haltestützen 4 verlaufender Fortsatz 28 entsteht. In dem Fortsatz 28 und gegenüberliegend in der anderen Haltestütze 4 sind Löcher 29 zur Aufnahme einer Sicherungsschraube vorgesehen. Zur Montage der Halteklammer 1 von einer Seite auf einem Trägerprofil 15 ist gemäß Fig. 30 mit der einen Haltestütze 4 ein Halteblech 30 mit seiner einen Längsseite fest verbunden. An der oberen, freien Längsseite sind zwei Abschnitte 16, 16' in entgegengesetzter Richtung rechtwinklig abgebogen, so dass zwei Haltekammern 2, 2' entstehen, die besonders zur Aufnahme von gerahmten Solarmodulen geeignet sind.

Gemäß Fig. 31 sind die Basisplatte 14 und die von ihr senkrecht abragenden Haltestützen 4, wie anhand von Fig. 30 beschrieben, einstückig geformt oder aus einem Materialstreifen gebogen. Zur Montage der Halteklammer 1 von einer Seite auf einem Trägerprofil 15 ist mit der einen Haltestütze 4 eine Halteklammer 1 mit zwei übereinander liegenden, in entgegengesetzter Richtung offenen, U-förmigen Haltekammern 2, 2', wie sie oben z.B. anhand von Fig. 1 und Fig.2 beschrieben sind, über den untersten U-Schenkel 3 der Haltekammern 2, 2' fest verbunden. Diese Ausführungsform ist besonders für die Montage rahmenloser Solarmodule geeignet.

Abschließend sei darauf hingewiesen, dass jede erfindungsgemäße Halteklammer, wenn gewünscht, auch zusammen mit einem Trägerprofil mit Nut oder einem anders gestalteten Profil eingesetzt werden kann. Vorteilhaft sollten die verwendeten Trägerprofile 15 bzw. die dafür vorzugsweise verwendeten Standardschienen abgerundete Kanten haben, um Beschädigungen zu vermeiden.

### Bezugszeichenliste:

- 1: Halteklammer, Materialstreifen
- 2,2': U-förmige Haltekammer
- 3: U-Schenkel
- 4: Haltestützen
- 5: Schraube
- 6: Mutter
- 7: Kammer
- 8: (Maden-)Schraube
- 9: Ecken
- 10: Winkelschiene
- 11: Fußteil
- 12: Platte
- 13: Abschnitt
- 14: Basisplatte
- 15: Trägerprofil
- 16 , 16': Abschnitte
- 17: Zunge
- 18: Solarmodul
- 19: Rahmen
- 20: Grundfläche
- 21: Hinterschneidung
- 22: Schenkel
- 23: Montagekante
- 24: Montageleiste
- 25: Montagewinkel
- 26: Winkelblech
- 27: Begrenzung
- 28: Fortsatz
- 29: Löcher
- 30: Halteblech

## Patentansprüche

1. Halteklammer für die Montage von Solarmodulen oder ähnlichen Komponenten an einem Trägerprofil, **dadurch gekennzeichnet, dass** die Halteklammer (1) aus einem Materialstreifen besteht, der zumindest eine Basisplatte (14) aufweist, von der mindestens ein Paar Haltestützen (4) senkrecht in Bezug auf die Fläche der Basisplatte (14) in ein und derselben Richtung abragt, dass der Abstand der Haltestützen (4) zueinander so bemessen ist, dass die Halteklammer (1) mit diesen Haltestützen (4) auf ein Trägerprofil (15) in Form einer beliebigen Standardschiene aufschiebbar oder aufsetzbar ist und dass die Länge der Haltestützen (4) so bemessen ist, dass die Halteklammer (1) durch mindestens eine seitliche Schraubverbindung oder eine seitliche Stiftverbindung über mindestens eine der Haltestützen (4) in ihrer Stellung auf der Standardschiene als Trägerprofil (15) gesichert ist.

2. Halteklammer nach Anspruch 1, **dadurch gekennzeichnet, dass** die Länge der Haltestützen (4) so bemessen ist, dass die Halteklammer (1) durch eine in einem dem Querschnittsprofil des Trägerprofils (15) entsprechenden Mindestabstand zur Basisplatte (14) beide Haltestützen (4) durchdringende Schraube (5) oder einen Stift in ihrer Stellung auf dem Trägerprofil (15) gesichert ist.

3. Halteklammer nach Anspruch 1, **dadurch gekennzeichnet, dass** die Länge der Haltestützen (4) so bemessen ist, dass die Halteklammer (1) durch eine die eine Haltestütze (4) seitlich bis auf das Trägerprofil (15) durchdringende Schraube (8) oder einen Stift in ihrer Stellung auf dem Trägerprofil (15) gesichert ist.

4. Halteklammer nach Anspruch 1, **dadurch gekennzeichnet, dass** der Abstand der Haltestützen (4) zueinander so bemessen ist, dass zwischen den Haltestützen (4) und dem Trägerprofil (15) Reibschluss besteht.

5. Halteklammer nach Anspruch 1, **dadurch gekennzeichnet, dass** die Haltestützen (4) an der Basisplatte (14) der Halteklammer (1) angeschweißt sind.

6. Halteklammer nach Anspruch 1, **dadurch gekennzeichnet, dass** die Haltestützen (4) und die Basisplatte (14) der Halteklammer (1) einstückig geformt sind.

7. Halteklammer nach Anspruch 1, **dadurch gekennzeichnet, dass** die Basisplatte (14) der Halteklammer (1) mit einer sie nach einer Seite verlängernden Winkelschiene (10) verbunden ist und im Abstand zur Basisplatte (14) mindestens ein Paar Haltestützen (4) von der Winkelschiene (10) senkrecht in Bezug auf die Fläche der Basisplatte (14) bzw. der Winkelschiene (10) und von der Basisplatte (14) weg gerichtet abragt.

8. Halteklammer nach Anspruch 7, **dadurch gekennzeichnet, dass** im Abstand zur Basisplatte (14) zwei Paar Haltestützen (4) zueinander beabstandet von der Winkelschiene (10) senkrecht in Bezug auf die Fläche der Basisplatte (14) bzw. der Winkelschiene (10) und von der Basisplatte (14) weg gerichtet abragen.

9. Halteklammer nach Anspruch 1, **dadurch gekennzeichnet, dass** der Materialstreifen (1), aus dem die Halteklammer (1) gebildet ist, mindestens einmal U-förmig gebogen ist und so mindestens eine U-förmig liegende Haltekammer (2) für ein Solarmodul oder eine ähnliche Komponente gebildet ist, dass vom die Basisplatte (14) bildenden, unteren U-Schenkel (3) der Halteklammer (1) mindesten ein Paar Haltestützen (4) senkrecht in Bezug auf die Fläche der Basisplatte (14) bzw. des unteren U-Schenkels (3) der Halteklammer (1) und von der gebildeten Haltekammer (2) weg gerichtet abragt und der Abstand der Haltestützen (4) zueinander so bemessen ist, dass die Halteklammer (1) mit diesen Haltestützen (4) auf ein beliebiges Trägerprofil (15) aufschiebbar oder aufsetzbar ist, und dass die Länge der Haltestützen (4) so bemessen ist, dass die Halteklammer (1) durch mindestens eine Schraubverbindung oder eine Stiftverbindung über mindestens eine der Haltestützen (4) in ihrer Stellung auf dem Trägerprofil (15) gesichert ist.

10. Halteklammer nach Anspruch 1, **dadurch gekennzeichnet, dass** der Materialstreifen (1), aus dem die Halteklammer (1) gebildet ist, zu zwei U-förmigen, in entgegengesetzter Richtung offene Haltekammern (2, 2') für Solarmodule oder ähnliche Komponenten geformt ist, dass vom die Basisplatte (14) bildenden, untersten U-Schenkel (3) der Halteklammer (1) ein Paar Haltestützen (4) senkrecht in Bezug auf die Fläche der Basisplatte (14) bzw. des untersten U-Schenkels (3) und von den Haltekammern (2, 2') weg gerichtet abragt, wobei der Abstand zwischen den Haltestützen (4) so bemessen ist, dass die Halteklammer (1) mit diesen Haltestützen (4) reibschlüssig auf ein Trägerprofil (15) aufschiebbar oder aufsetzbar ist und die Länge der Haltestützen (4) so bemessen ist, dass die Halteklammer (1) durch mindestens eine Schraubverbindung oder eine Stiftverbindung über mindestens eine der Haltestützen (4) in ihrer Stellung auf dem Trägerprofil (15) gesichert ist.

11. Halteklammer nach Anspruch 1, **dadurch gekennzeichnet, dass** die Halteklammer (1) aus einem Materialstreifen (1) besteht, der zweifach U-förmig gebogen ist und so zwei U-förmig übereinander liegende, in entgegengesetzter Richtung offene Haltekammern (2, 2') für Solarmodule oder ähnliche Komponenten gebildet sind, dass von dem die Basisplatte (14) bildenden, untersten U-Schenkel (3) der Halteklammer (1) ein Paar Haltestützen (4) senkrecht in Bezug auf die Fläche der Basisplatte (14) bzw. des untersten U-Schenkels (3) und von den Haltekammern (2, 2') weg gerichtet abragt, wobei der Abstand zwischen den Haltestützen (4) so bemessen ist, dass die Halteklammer (1) mit diesen Haltestützen (4) reibschlüssig auf ein Trägerprofil (15) aufsetzbar oder aufschiebbar ist und die Länge der Haltestützen (4) so bemessen ist, dass die Halteklammer (1) auf dem Trägerprofil (15) mit Hilfe mindestens einer Schraubverbindung oder Stiftverbindung über mindestens eine der Haltestützen (4) gesichert ist.

12. Halteklammer nach Anspruch 10 oder 11, **dadurch gekennzeichnet, dass** die äu ßeren Ecken (9) des untersten U-Schenkels (3) der Halteklammer (1) in Richtung der Haltestützen (4) abgebogen sind.

13. Halteklammer nach Anspruch 10 oder 11, **dadurch gekennzeichnet, dass** der unterste U-Schenkel (3) der Halteklammer (1) mit einer diesen U-Schenkel (3) nach einer Seite verlängernden Winkelschiene (10) verbunden ist und im Abstand zu den Haltekammern (2, 2') mindestens ein Paar Haltestützen (4) von der Winkelschiene (10) senkrecht in Bezug auf die Fläche der Winkelschiene (10) und von den Haltekammern (2, 2') weg gerichtet abragt.

14. Halteklammer nach Anspruch 13, **dadurch gekennzeichnet, dass** im Abstand zu den Haltekammern (2, 2') zwei Paar Haltestützen (4) zueinander beabstandet von der Winkelschiene (10) senkrecht in Bezug auf die Fläche der Winkelschiene (10) und von den Haltekammern (2, 2') weg gerichtet abragen.

15. Halteklammer nach Anspruch 9, **dadurch gekennzeichnet, dass** nur eine U-förmig liegende Haltekammer (2) gebildet ist und der untere U-Schenkel (3) der Haltekammer (2) verlängert und einmal nach unten und ein weiteres Mal in die den U-Schenkel (3) verlängernde Richtung rechtwinklig, ein Fußteil (11) bildend abgebogen ist und dieser Fußteil (11) mit einer Platte (12) verbunden ist, von der ein Paar Haltestützen (4) senkrecht in Bezug auf die Fläche des Fußteils (11) bzw. der Platte (12) und von der Haltekammer (2) weg gerichtet abragt.

16. Halteklammer nach Anspruch 9, **dadurch gekennzeichnet, dass** nur eine U-förmig liegende Haltekammer (2) gebildet ist und der untere U-Schenkel (3) der Haltekammer (2) verlängert und einmal nach unten und ein weiteres Mal rechtwinklig, ein Fußteil (11) bildend abgebogen ist und dass von diesem Fußteil (11) ein paar Haltestützen (4) senkrecht in Bezug auf die Fläche des Fußteils (11) und von der Haltekammer (2) weg gerichtet abragt.

17. Halteklammer nach Anspruch 15 oder 16, **dadurch gekennzeichnet, dass** das Paar Haltestützen (4) sich unter der Haltekammer (2) der Halteklammer (1) befindet.

18. Halteklammer nach Anspruch 15 oder 16, **dadurch gekennzeichnet, dass** das Paar Haltestützen (4) zur Haltekammer (2) der Halteklammer (1) versetzt ist.

19. Halteklammer nach Anspruch 1, **dadurch gekennzeichnet, dass** die Basisplatte (14) und die von ihr senkrecht abragenden Haltestützen (4) einstückig aus einem Materialstreifen geformt sind, dass die Basisplatte (14) und die Haltestützen (4) einen nach drei Seiten begrenzten Raum zur Aufnahme eines Trägeprofils (15) bilden und eine Halteklammer (1) mit mindestens einer Haltekammer (2) über der einen Haltestütze (4) liegend angeordnet und befestigt ist.

20. Halteklammer nach Anspruch 19, **dadurch gekennzeichnet, dass** mindestens eine Haltestütze (4) an ihrem freien Ende zweimal rechtwinklig abgewinkelt ist und dadurch eine teilweise, streifenförmige Begrenzung (27) auch an der vierten Seite des das Trägerprofil (15) aufnehmenden Raums gegeben ist und ein parallel zu den Haltestützen (4) verlaufender, nach innen versetzter Fortsatz (28) besteht und dass in dem Fortsatz (28) und gegenüberliegend in der anderen Haltestütze (4) Löcher (29) zur Aufnahme einer Sicherungsschraube vorgesehen sind.
